# EUROPÄISCHE PATENTANMELDUNG

(11) **EP 4 120 112 A1**
(43) Veröffentlichungstag der Anmeldung: **18.01.2023**
(21) Anmeldenummer: 22181147.4
(22) Anmeldetag: 27.06.2022
(51) Int. Cl.: G06F 21/57

(54) **RECHENANLAGE UND VERFAHREN ZU DEREN BETRIEB**

(30) Priorität: 16.07.2021 DE 102021207628
(71) Anmelder: Siemens Mobility GmbH, 81739 München (DE)
(72) Erfinder: Harsch, Waldemar, 30519 Hannover (DE)

(57) **Zusammenfassung**

Die Erfindung bezieht sich unter anderem auf eine Rechenanlage (30) mit einer Recheneinrichtung (31) und einem Speicher (32), in dem eine die Arbeitsweise der Recheneinrichtung (31) definierende Software (SW) abgespeichert ist, wobei die Recheneinrichtung (31) bei Ausführung der Software (SW) geeignet ist, Daten (D1) auf der Basis einer der Rechenanlage (30) zugeordneten Signatur (SIG) zu sichern. Erfindungsgemäß ist vorgesehen, dass die Software (SW) ein Signaturbildungsmodul (SBM) aufweist, das die Signatur (SIG) - nach einem Neustart - selbst errechnet, und zwar auf der Basis von Hilfsdaten (HD), die sich von der Signatur (SIG) unterscheiden, und einer Abbildungsfunktion (ABF), die ein Errechnen der Signatur (SIG) unter Heranziehung der Hilfsdaten (HD) ermöglicht, und die Recheneinrichtung (31) das Sichern der Daten (D1) auf der Basis der selbst errechneten Signatur (SIG) durchführt.

## Beschreibung

Die Erfindung bezieht sich auf Rechenanlagen mit einer Recheneinrichtung und einem Speicher, in dem eine die Arbeitsweise der Recheneinrichtung definierende Software abgespeichert ist, wobei die Recheneinrichtung bei Ausführung der Software geeignet ist, Daten auf der Basis einer der Rechenanlage zugeordneten Signatur zu sichern.

Bei Rechenanlagen besteht das Problem, dass nach einem Neustart der Rechenanlage die Software, die die spätere Arbeitsweise der Rechenanlage festlegt, womöglich fehlerhaft geladen und/oder fehlerhaft ausgeführt wird, sodass die Software insgesamt womöglich fehlerhaft arbeitet und womöglich fehlerhafte Ergebnisse liefert. Um bei sicherheitsrelevanter Software festzustellen, ob die Software richtig geladen wurde und richtig ausgeführt wird, müssen somit Kontrollmechanismen vorgesehen werden.

Im Bereich der Eisenbahntechnik sind sichere Rechnersysteme bei elektronischen Stellwerken der Firma Siemens unter dem Produktnamen SIMIS bekannt. Bei diesen Stellwerken arbeiten zwei Kanäle separat; ein Hardwarevergleicher vergleicht die Arbeitsergebnisse der zwei Kanäle und erzeugt ein Warnsignal, wenn Abweichungen erkannt werden.

Der Erfindung liegt die Aufgabe zugrunde, eine Rechenanlage anzugeben, bei der ohne großen Aufwand eine Prüfung der Software nach einem Neustart durchführbar ist.

Diese Aufgabe wird erfindungsgemäß durch eine Rechenanlage mit den Merkmalen gemäß Patentanspruch 1 gelöst. Vorteilhafte Ausgestaltungen der erfindungsgemäßen Rechenanlage sind in Unteransprüchen angegeben.

Danach ist erfindungsgemäß vorgesehen, dass die Software ein Signaturbildungsmodul aufweist, das die Signatur - nach einem Neustart während des Hochfahrens oder nach dem Hochfahren - selbst errechnet, und zwar auf der Basis von Hilfsdaten, die sich von der Signatur unterscheiden, und einer Abbildungsfunktion, die ein Errechnen der Signatur unter Heranziehung der Hilfsdaten ermöglicht, und die Recheneinrichtung das Sichern der Daten auf der Basis der selbst errechneten Signatur durchführt.

Ein wesentlicher Vorteil der erfindungsgemäßen Rechenanlage besteht darin, dass diese die Signatur, auf deren Basis im Betrieb gesicherte Daten gebildet werden, selbst erzeugen muss. Eine korrekte Bildung der Signatur setzt wiederum voraus, dass die Software selbst korrekt geladen und hochgefahren wird bzw. worden ist; denn ein Fehler beim Hochfahren und ein Fehler der Arbeitsweise der Software würde mit sehr hoher Wahrscheinlichkeit dazu führen, dass auf der Basis der Hilfsdaten keine korrekte Signatur erzeugt werden kann. Die Arbeitsweise der Software kann somit allein durch eine Überprüfung der Signatur gesicherter Daten, also mit sehr geringem Aufwand beispielsweise auch außerhalb der Rechenanlage, kontrolliert werden.

Besonders einfach und damit vorteilhaft lässt sich das Verfahren durchführen, wenn die Hilfsdaten durch eine einzige Zahl gebildet sind.

Die Bildung der Signatur auf der Basis der Hilfsdaten kann beispielsweise unter Heranziehung einer Abbildungsfunktion erfolgen, die die Hilfsdaten mit einer Konstante multipliziert und/oder zu einer anderen Konstante addiert. Selbstverständlich sind auch andere und komplexere Berechnungen denkbar, um einen etwaigen Fehler in der Arbeit des Softwareprogrammmoduls sichtbar zu machen.

Bei einer vorteilhaften Ausgestaltung des Verfahrens sind die Hilfsdaten in der Software als Softwarebestandteil fest implementiert.

Bei einer anderen vorteilhaften Ausgestaltung des Verfahrens ist vorgesehen, dass die Hilfsdaten von der Software separat sind und bei der Erstinbetriebnahme oder Neuparametrierung der Rechenanlage nutzerseitig im Speicher abgespeichert werden. Bei der letztgenannten Ausgestaltung können bedienerseitig die Hilfsdaten und damit die Signatur jederzeit geändert werden.

Besonders bevorzugt wird die errechnete Signatur in der Rechenanlage ausschließlich in einem oder mehreren flüchtigen Speichern abgespeichert und nach jedem Herunterfahren der Rechenanlage gelöscht. Durch diese Maßnahme wird sichergestellt, dass bei jedem Herunterfahren der Rechenanlage die Signatur verloren geht und beim nächsten Neustart tatsächlich neu berechnet werden muss.

Die Signatur umfasst vorzugsweise einen privaten Schlüssel eines Schlüsselpaares oder wird vorzugsweise durch einen solchen privaten Schlüssel gebildet. Das Schlüsselpaar umfasst wiederum vorzugsweise den privaten Schlüssel und einen dazu passenden öffentlichen Schlüssel. Die Signatur kann beispielsweise durch den privaten Schlüssel eines PGP(pretty good privacy)-Schlüsselpaares gebildet sein.

Um ein unbefugtes Mitlesen der Daten zu verhindern, ist es vorteilhaft, wenn die Recheneinrichtung die Daten sichert, indem sie diese mit Hilfe der Signatur komplett verschlüsselt.

Ist ein Mitlesen unkritisch und soll nur eine Datenverfälschung entdeckt werden, so kann die Recheneinrichtung die Daten sichern, indem sie mit den Daten Kontrolldaten erzeugt, die Kontrolldaten verschlüsselt und die verschlüsselten Kontrolldaten, insbesondere in Form eines Hash-Codes, zu den Daten unter Bildung der gesicherten Daten hinzufügt.

Mit Blick auf eine hohe Wahrscheinlichkeit, dass die korrekte Signaturbildung beim Hochfahren der Rechenanlage scheitert, wenn ein Softwarefehler oder ein Fehler des Startvorgangs auftritt, wird es als vorteilhaft angesehen, wenn das Signaturbildungsmodul zwei oder mehr Untermodule aufweist, die innerhalb der Software an unterschiedlichen Stellen implementiert sind und bei Ausführung des Signaturbildungsmoduls individuell aufgerufen werden.

Bei der Software kann es sich um sicherheitsrelevante Software, insbesondere gemäß einer oder mehrerer eisenbahntechnischer Sicherheitsnormen, handeln, da aufgrund der beschriebenen Maßnahmen eine Fehlererkennung sehr wahrscheinlich ist.

Die Erfindung bezieht sich außerdem auf eine Anordnung mit einer Rechenanlage wie oben beschrieben, wobei die Anordnung eine Empfangseinrichtung aufweist, die die gesicherten Daten der Rechenanlage einer Signaturprüfung unterwirft und ein Warnsignal erzeugt, wenn die Signaturprüfung scheitert. Die Funktion der Empfangseinrichtung kann (muss aber nicht) allein darin bestehen, die Signaturprüfung vorzunehmen.

Die Erfindung bezieht sich darüber hinaus auf ein Fahrzeugsteuergerät, insbesondere Schienenfahrzeugsteuergerät. Erfindungsgemäß ist vorgesehen, dass dieses mit einer Rechenanlage und/oder einer Anordnung mit Rechenanlage, wie oben beschrieben, ausgestattet ist.

Bezüglich der Vorteile des erfindungsgemäßen Fahrzeugsteuergeräts und bezüglich vorteilhafter Ausgestaltungen des erfindungsgemäßen Fahrzeugsteuergeräts sei auf die obigen Ausführungen im Zusammenhang mit der erfindungsgemäßen Rechenanlage und deren vorteilhafter Ausgestaltungen verwiesen.

Die Erfindung bezieht sich darüber hinaus auf eine eisenbahntechnische Anlage, insbesondere in Form eines Stellwerks. Erfindungsgemäß ist vorgesehen, dass die eisenbahntechnische Anlage mit einer Rechenanlage und/oder einer Anordnung mit Rechenanlage, wie oben beschrieben, ausgestattet ist.

Bezüglich der Vorteile der erfindungsgemäßen eisenbahntechnischen Anlage und bezüglich vorteilhafter Ausgestaltungen der erfindungsgemäßen eisenbahntechnischen Anlage sei wieder auf die obigen Ausführungen im Zusammenhang mit der erfindungsgemäßen Rechenanlage und deren vorteilhafter Ausgestaltungen verwiesen.

Die Erfindung bezieht sich darüber hinaus auf ein Verfahren zum Betreiben einer Rechenanlage, die mit einer Recheneinrichtung und einem Speicher ausgestattet ist, wobei in dem Rechner eine die Arbeitsweise der Recheneinrichtung definierende Software abgespeichert ist, und wobei die Recheneinrichtung bei Ausführung der Software geeignet ist, Daten auf der Basis einer der Rechenanlage zugeordneten Signatur zu sichern. Erfindungsgemäß ist bezüglich des Verfahrens vorgesehen, dass die Software - nach einem Neustart, beispielsweise während des Hochfahrens oder nach dem Hochfahren der Rechenanlage und/oder der Software - die Signatur selbst errechnet, und zwar auf der Basis von Hilfsdaten, die sich von der Signatur unterscheiden, und einer Abbildungsfunktion, die ein Errechnen der Signatur unter Heranziehung der Hilfsdaten ermöglicht.

Bezüglich der Vorteile des erfindungsgemäßen Verfahrens und bezüglich vorteilhafter Ausgestaltungen des erfindungsgemäßen Verfahrens sei wieder auf die obigen Ausführungen im Zusammenhang mit der erfindungsgemäßen Rechenanlage und deren vorteilhafter Ausgestaltungen verwiesen.

Vorteilhaft ist es, wenn das Verfahren von einer Rechenanlage eines Fahrzeugsteuergeräts oder von einer Rechenanlage einer eisenbahntechnischen Anlage ausgeführt wird.

Bei einer vorteilhaften Ausgestaltung des Verfahrens ist vorgesehen, dass die Rechenanlage als Sendeeinrichtung arbeitet und zu sendende Daten auf der Basis der errechneten Signatur unter Bildung gesicherter Daten sichert und die gesicherten Daten zu einer Empfangseinrichtung sendet, und die Empfangseinrichtung die empfangenen Daten einer Signaturprüfung unterwirft. Die Empfangseinrichtung erzeugt vorzugsweise ein Warnsignal und/oder verwirft die Daten, wenn die Signaturprüfung scheitert.

Arbeitet die Rechenanlage bzw. die Sendeeinrichtung in einem Fahrzeug, so kann die Empfangseinrichtung beispielsweise eine fahrzeugeigene Komponente oder alterativ beispielsweise eine streckenseitige Einrichtung sein.

Die Funktion der Empfangseinrichtung kann allein darin bestehen bzw. die Empfangseinrichtung kann allein dazu betrieben werden, eine Signaturprüfung vorzunehmen, ohne die Daten ansonsten inhaltlich weiter zu verarbeiten; in diesem Falle wird die Empfangseinrichtung also lediglich als Softwareprüfeinrichtung zum Prüfen der korrekten Arbeitsweise der Software der Rechenanlage bzw. Sendeeinrichtung betrieben und bildet mit anderen Worten lediglich eine externe Softwareprüfeinrichtung.

Bei den zu sendenden Daten, die auf der Basis der errechneten Signatur unter Bildung der gesicherten Daten gesichert werden, kann es sich um Test-Daten handeln, deren Funktion lediglich darin besteht, gesicherte Daten erzeugen zu können, damit die Signaturprüfung und damit die Prüfung der Software der Rechenanlage ermöglicht wird.

Die Erfindung wird nachfolgend anhand von Ausführungsbeispielen näher erläutert; dabei zeigen beispielhaft
- Figur 1: ein Ausführungsbeispiel für eine erfindungsgemäße Rechenanlage, die in einem Fahrzeugsteuergerät eines Schienenfahrzeugs integriert ist und bei der Hilfsdaten keinen vorab festgelegten Softwarebestandteil bilden, sondern benutzerseitig eingebbar sind,
- Figur 2: ein Ausführungsbeispiel für eine erfindungsgemäße Rechenanlage, die in einem Fahrzeugsteuergerät eines Schienenfahrzeugs integriert ist und bei der Hilfsdaten als Softwarebestandteil fest integriert sind,
- Figur 3: ein Ausführungsbeispiel für eine erfindungsgemäße Rechenanlage, die in einem Fahrzeugsteuergerät eines Schienenfahrzeugs integriert ist und bei der ein Signaturbildungsmodul auf zwei oder mehr Untermodule aufgeteilt ist, und
- Figur 4: ein Ausführungsbeispiel für eine erfindungsgemäße Rechenanlage, die in einem Stellwerk integriert ist.

In den Figuren werden der Übersicht halber für identische oder vergleichbare Komponenten stets dieselben Bezugszeichen verwendet.

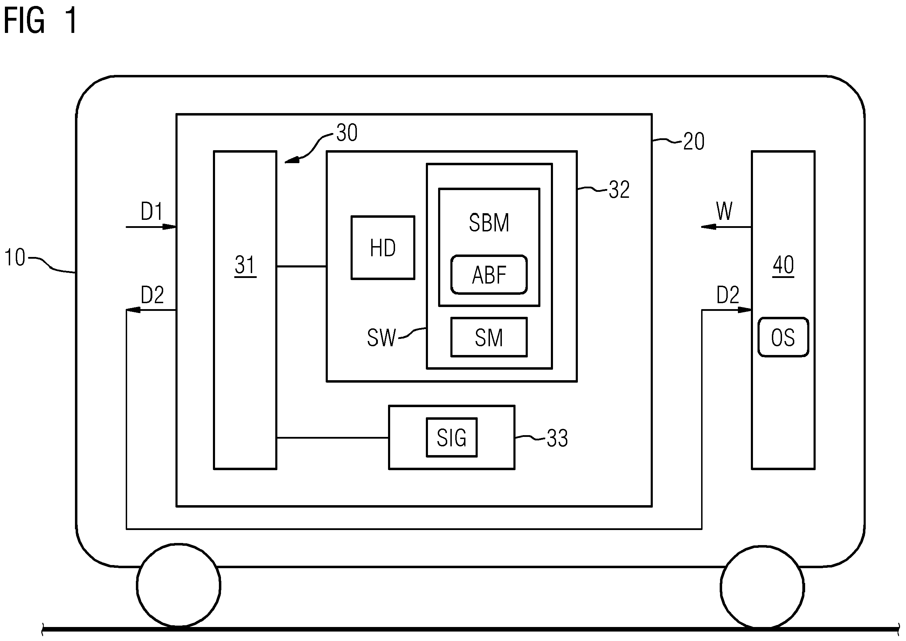

Die Figur 1 zeigt ein Ausführungsbeispiel für ein Schienenfahrzeug 10, das mit einem Schienenfahrzeugsteuergerät 20 ausgestattet ist. Das Schienenfahrzeugsteuergerät 20 umfasst eine Rechenanlage 30, die eine Recheneinrichtung 31, einen nichtflüchtigen Speicher 32 und einen flüchtigen Speicher 33 aufweist.

In dem nichtflüchtigen Speicher 32 der Rechenanlage 30 ist Software in Form eines Softwareprogrammmoduls SW abgespeichert, das bei Ausführung durch die Recheneinrichtung 31 die Arbeitsweise der Rechenanlage 30 definiert bzw. festlegt. Das Softwareprogrammmodul SW umfasst u.a. ein Sicherungsmodul SM, das bei Ausführung durch die Rechenanlage 30 bzw. deren Recheneinrichtung 31 eingangsseitig anliegende Daten D1 auf der Basis einer der Rechenanlage 30 zugeordneten Signatur SIG sichert und gesicherte Daten D2 erzeugt.

Bei der Signatur SIG kann es sich beispielsweise um einen privaten Schlüssel eines Schlüsselpaares handeln, das den privaten Schlüssel und einen dazu passenden öffentlichen Schlüssel umfasst.

Das Sichern der Daten D1 kann beispielsweise erfolgen, indem diese mit Hilfe der Signatur SIG komplett verschlüsselt werden. Alternativ kann die Recheneinrichtung 30 die ungesicherten Daten D1 sichern, indem sie mit den ungesicherten Daten D1 zunächst Kontrolldaten erzeugt, lediglich die Kontrolldaten verschlüsselt und die verschlüsselten Kontrolldaten zu den ungesicherten Daten D1 unter Bildung der gesicherten Daten D2 hinzufügt. Bei den Kontrolldaten kann sich beispielsweise um sogenannte Hash-Codes handeln.

Die Signatur SIG ist bei der Rechenanlage 30 absichtlich nicht in dem nichtflüchtigen Speicher 32 abgespeichert, sondern wird erst erzeugt und in dem flüchtigen Speicher 33 abgespeichert, wenn das Softwareprogrammmodul SW neu gestartet wird bzw. die Rechenanlage 30 hochgefahren wird. Dies bedeutet, dass nach einem jeden Herunterfahren der Rechenanlage 30 die Signatur SIG im flüchtigen Speicher 33 verlorengeht, weil sie nicht fest bzw. nicht dauerhaft gespeichert ist, sondern vom dauerhaften Betrieb der Rechenanlage 30 abhängt.

Das Softwareprogrammmodul SW umfasst darüber hinaus ein Signaturbildungsmodul SBM, das die Signatur SIG nach einem Neustart des Softwareprogrammmoduls SW, insbesondere während des Hochfahrens oder unmittelbar nach dem Hochfahren der Rechenanlage 30, selbst errechnet, und zwar auf der Basis von Hilfsdaten HD, die ebenfalls in dem nichtflüchtigen Speicher 32 abgespeichert sind. Bei dem Ausführungsbeispiel gemäß Figur 1 sind die Hilfsdaten HD von dem Softwareprogrammmodul SW separat und können somit bei der Erstinbetriebnahme der Rechenanlage 30 oder jeder Neuparametrierung der Rechenanlage 30 nutzerseitig festgelegt und im nichtflüchtigen Speicher 32 abgespeichert werden.

Die Bildung der Signatur SIG auf der Basis der Hilfsdaten HD erfolgt unter Heranziehung einer Abbildungsfunktion ABF, die vorzugsweise in dem Signaturbildungsmodul SBM integriert ist und bei Ausführung durch die Recheneinrichtung 31 ein Errechnen der Signatur SIG unter Heranziehung der Hilfsdaten HD ermöglicht.

Mit anderen Worten wird bei einem Starten bzw. Hochfahren der Rechenanlage 30 und/oder bei jedem Starten des Softwareprogrammmoduls SW das Signaturbildungsmodul SBM ausgeführt, damit auf der Basis der Hilfsdaten HD die Signatur SIG jeweils neu gebildet wird und diese jeweils neu im flüchtigen Speicher 33 abgespeichert wird.

Die Bildung der Signatur SIG auf der Basis der Hilfsdaten HD kann beispielsweise unter Heranziehung einer Abbildungsfunktion ABF erfolgen, die die Hilfsdaten HD mit einer Konstante multipliziert und/oder zu einer anderen Konstante addiert. Selbstverständlich sind auch komplexere Berechnungen denkbar, um einen etwaigen Fehler in der Arbeit des Softwareprogrammmoduls SW sichtbar zu machen.

Die Rechenanlage 30 kann beispielsweise als Sendeeinrichtung arbeiten und die auf der Basis der selbst errechneten Signatur SIG gesicherten Daten D2 an eine Empfangseinrichtung 40 senden. Die Empfangseinrichtung 40 kann eine ebenfalls im Schienenfahrzeug 10 angeordnete schienenfahrzeugseitige Einrichtung sein; alternativ kann es sich bei der Empfangseinrichtung 40 auch um eine streckenseitige Einrichtung handeln, zu der die signierten Daten D2 über Funk oder auf andere Weise übertragen werden.

Empfängt die Empfangseinrichtung 40 die gesicherten Daten D2 der Rechenanlage 30, so überprüft sie die Signatur und verwirft die Daten D2, wenn die Signaturprüfung scheitert. Das Prüfen der Signatur kann beispielsweise mit einem der Signatur SIG zugeordneten öffentlichen Schlüssel erfolgen, wie dies allgemein bekannt ist. Ein solcher öffentlicher Schlüssel, der zu dem privaten Schlüssel passt, ist bei dem Ausführungsbeispiel gemäß Figur 1 in der Empfangseinrichtung 40 abgespeichert und mit dem Bezugszeichen OS gekennzeichnet.

Im Falle eines Scheiterns der Signaturprüfung wird die Empfangseinrichtung 40 die empfangenen Daten D2 verwerfen; außerdem ist es vorteilhaft, wenn die Empfangseinrichtung 40 darüber hinaus ein Warnsignal W erzeugt, das einen Fehler in der Arbeitsweise der Rechenanlage 30 anzeigt.

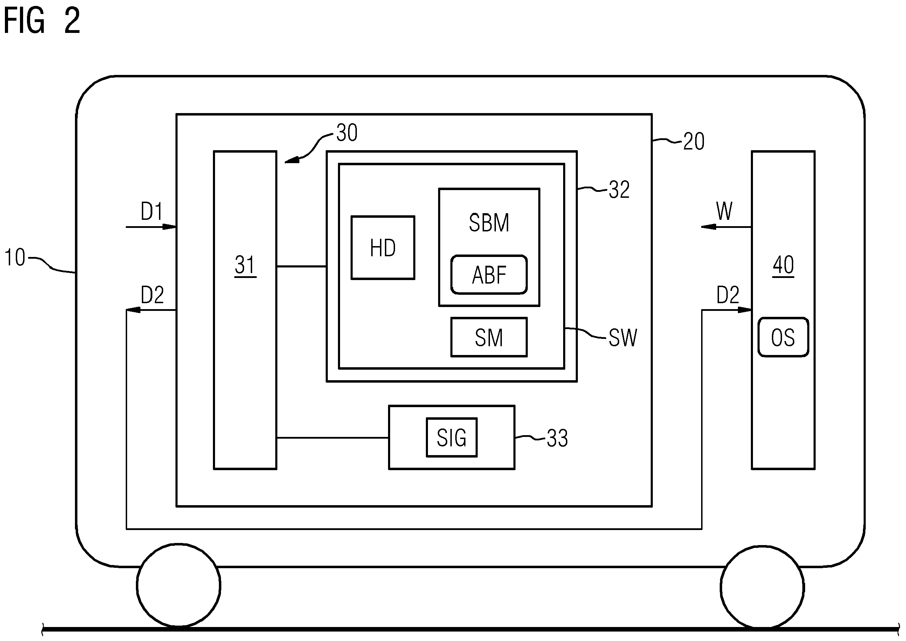

Die Figur 2 zeigt eine Ausführungsvariante der Rechenanlage 30 gemäß Figur 1. Bei der Ausführungsvariante gemäß Figur 2 sind die Hilfsdaten HD nicht separat von dem Softwareprogrammmodul SW im nichtflüchtigen Speicher 32 abgespeichert, sondern fest in das Softwareprogrammmodul SW integriert, sodass diese einen festen, unveränderlichen Bestandteil des Softwareprogrammmoduls SW bilden. Im Übrigen gelten die obigen Ausführungen im Zusammenhang mit der Figur 1 bei der Rechenanlage 30 gemäß Figur 2 entsprechend.

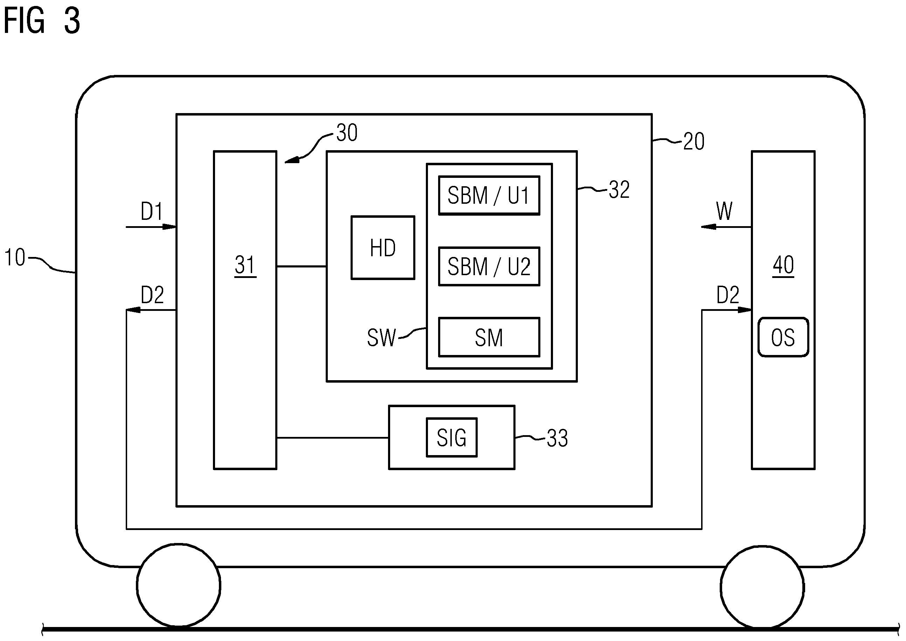

Die Figur 3 zeigt eine andere Ausführungsvariante der Rechenanlage 30 gemäß Figur 1. Bei der Ausführungsvariante gemäß Figur 3 ist das Signaturbildungsmodul SBM auf zwei oder mehr Untermodule SBM/U1 bzw. SBM/U2 aufgeteilt, sodass es möglich ist, die Untermodule innerhalb des Softwareprogrammmoduls SW an unterschiedlichen Stellen zu implementieren und bei Ausführung des Signaturbildungsmoduls SBM individuell oder gemeinsam aufzurufen. Ein etwaiger Fehler im Softwareprogrammmodul SW bzw. beim Starten des Softwareprogrammmoduls SW wird bei einer Aufteilung des Signaturbildungsmoduls SBM auf mehrere Untermodule mit besonders großer Wahrscheinlichkeit erfasst.

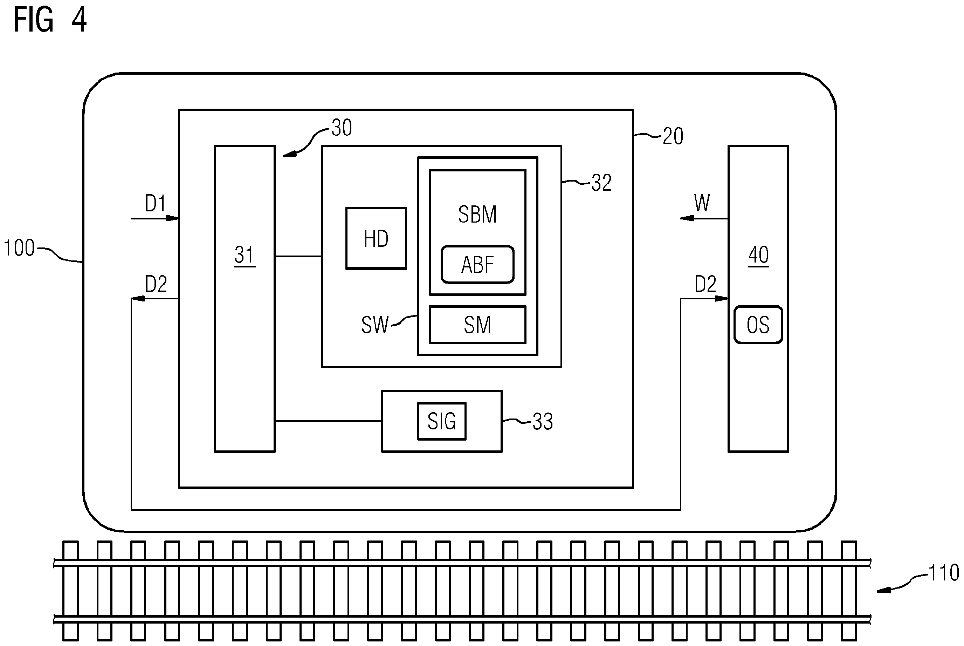

Die Figur 4 zeigt ein Ausführungsbeispiel für eine eisenbahntechnische Anlage in Form eines Stellwerks 100, das mit einer Rechenanlage 30 ausgestattet ist und zur Steuerung einer Eisenbahngleisanlage 110 dient. Die Rechenanlage 30 kann beispielsweise einer der Rechenanlagen 30 gemäß den Figuren 1 bis 3 entsprechen, sodass diesbezüglich auf die obigen Ausführungen im Zusammenhang mit den Figuren 1 bis 3 verwiesen sei.

Die von der Rechenanlage 30 gemäß Figur 4 gesicherten Daten D2 gelangen, wenn die Rechenanlage 30 als Datensendeeinrichtung arbeitet, zu einer Empfangseinrichtung 40, die die empfangenen gesicherten Daten D2 einer Signaturprüfung unterwirft und die empfangenen Daten D2 verwirft, wenn die Signaturprüfung scheitert. Im Falle eines Scheiterns der Signaturprüfung ist es vorteilhaft, wenn die Empfangseinrichtung 40 darüber hinaus ein Warnsignal W erzeugt, das einen Fehler in der Arbeitsweise der Rechenanlage 30 anzeigt.

Die Empfangseinrichtung 40 kann einen Bestandteil des Stellwerks 100 bilden; alternativ kann die Empfangseinrichtung 40 auch eine separate Einrichtung sein, die streckenseitig installiert ist oder in einem Schienenfahrzeug, beispielsweise in dem Schienenfahrzeug gemäß der Figuren 1 bis 3 integriert ist.

Im Übrigen gelten die obigen Ausführungen im Zusammenhang mit den Figuren 1 bis 3 bei dem Ausführungsbeispiel gemäß Figur 4 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichen

- 10: Schienenfahrzeug
- 20: Schienenfahrzeugsteuergerät
- 30: Rechenanlage
- 31: Recheneinrichtung
- 32: nichtflüchtiger Speicher
- 33: flüchtiger Speicher
- 40: Empfangseinrichtung
- 100: Stellwerk
- 110: Eisenbahngleisanlage

- ABF: Abbildungsfunktion
- D1: Daten vor Sicherung
- D2: gesicherte Daten
- HD: Hilfsdaten
- OS: öffentlicher Schlüssel
- SBM: Signaturbildungsmodul
- SBM/U1: Untermodul
- SBM/U2: Untermodul
- SIG: Signatur
- SM: Sicherungsmodul
- SW: Softwareprogrammmodul
- W: Warnsignal

## Patentansprüche

1. Rechenanlage (30) mit einer Recheneinrichtung (31) und einem Speicher (32), in dem eine die Arbeitsweise der Recheneinrichtung (31) definierende Software (SW) abgespeichert ist, wobei die Recheneinrichtung (31) bei Ausführung der Software (SW) geeignet ist, Daten (D1) auf der Basis einer der Rechenanlage (30) zugeordneten Signatur (SIG) zu sichern, **dadurch gekennzeichnet, dass**
- die Software (SW) ein Signaturbildungsmodul (SBM) aufweist, das die Signatur (SIG) - nach einem Neustart - selbst errechnet, und zwar auf der Basis von Hilfsdaten (HD), die sich von der Signatur (SIG) unterscheiden, und einer Abbildungsfunktion (ABF), die ein Errechnen der Signatur (SIG) unter Heranziehung der Hilfsdaten (HD) ermöglicht, und
- die Recheneinrichtung (31) das Sichern der Daten (D1) auf der Basis der selbst errechneten Signatur (SIG) durchführt.

2. Rechenanlage (30) nach Anspruch 1,
**dadurch gekennzeichnet, dass** die Hilfsdaten (HD) durch eine einzige Zahl gebildet sind.

3. Rechenanlage (30) nach einem der voranstehenden Ansprüche, **dadurch gekennzeichnet, dass** die Hilfsdaten (HD) in der Software (SW) als Softwarebestandteil fest implementiert sind.

4. Rechenanlage (30) nach einem der voranstehenden Ansprüche, **dadurch gekennzeichnet, dass** die Hilfsdaten (HD) von der Software (SW) separat sind und bei der Erstinbetriebnahme der Rechenanlage (30) nutzerseitig im Speicher (32) abspeicherbar sind.

5. Rechenanlage (30) nach einem der voranstehenden Ansprüche, **dadurch gekennzeichnet, dass** die errechnete Signatur (SIG) in der Rechenanlage (30) ausschließlich in einem oder mehreren flüchtigen Speichern (33) abgespeichert wird und nach einem Herunterfahren der Rechenanlage (30) gelöscht wird.

6. Rechenanlage (30) nach einem der voranstehenden Ansprüche, **dadurch gekennzeichnet, dass** die Signatur (SIG) ein privater Schlüssel eines Schlüsselpaares ist, das den privaten Schlüssel und einen dazu passenden öffentlichen Schlüssel (OS) umfasst.

7. Rechenanlage (30) nach einem der voranstehenden Ansprüche, **dadurch gekennzeichnet, dass** die Recheneinrichtung (31) die Daten (D1) sichert, indem sie diese mit Hilfe der Signatur (SIG) komplett verschlüsselt.

8. Rechenanlage (30) nach einem der voranstehenden Ansprüche, **dadurch gekennzeichnet, dass** die Recheneinrichtung (31) die Daten (D1) sichert, indem sie mit den Daten (D1) Kontrolldaten erzeugt, die Kontrolldaten verschlüsselt und die verschlüsselten Kontrolldaten, insbesondere in Form eines Hash-Codes, zu den Daten (D1) unter Bildung der gesicherten Daten (D2) hinzufügt.

9. Rechenanlage (30) nach einem der voranstehenden Ansprüche, **dadurch gekennzeichnet, dass** das Signaturbildungsmodul (SBM) zwei oder mehr Untermodule (SBM/U1, SBM/U2) aufweist, die innerhalb der Software (SW) an unterschiedlichen Stellen implementiert sind und bei Ausführung des Signaturbildungsmoduls (SBM) individuell aufgerufen werden.

10. Rechenanlage (30) nach einem der voranstehenden Ansprüche, **dadurch gekennzeichnet, dass** die Software (SW) sicherheitsrelevante Software (SW), insbesondere sicherheitsrelevante Software auf dem Gebiet der Eisenbahntechnik, ist.

11. Anordnung mit einer Rechenanlage nach einem der voranstehenden Ansprüche, **dadurch gekennzeichnet, dass** eine Empfangseinrichtung (40) vorhanden ist, die die gesicherten Daten (D2) der Rechenanlage (30) einer Signaturprüfung unterwirft und ein Warnsignal (W) erzeugt, wenn die Signaturprüfung scheitert.

12. Fahrzeugsteuergerät, insbesondere Schienenfahrzeugsteuergerät (20), oder eisenbahntechnische Anlage, insbesondere Stellwerk (100), **dadurch gekennzeichnet, dass** dieses bzw. diese mit einer Rechenanlage (30) nach einem der voranstehenden Ansprüche ausgestattet ist.

13. Verfahren zum Betreiben einer Rechenanlage (30), die mit einer Recheneinrichtung (31) und einem Speicher (32) ausgestattet ist,
- wobei in dem Rechner eine die Arbeitsweise der Recheneinrichtung (31) definierende Software (SW) abgespeichert ist, und
- wobei die Recheneinrichtung (31) bei Ausführung der Software (SW) geeignet ist, Daten (D1) auf der Basis einer der Rechenanlage (30) zugeordneten Signatur (SIG) zu sichern, **dadurch gekennzeichnet, dass**
- die Software (SW) - nach einem Neustart - die Signatur (SIG) selbst errechnet, und zwar auf der Basis von Hilfsdaten (HD), die sich von der Signatur (SIG) unterscheiden, und einer Abbildungsfunktion (ABF), die ein Errechnen der Signatur (SIG) unter Heranziehung der Hilfsdaten (HD) ermöglicht.

14. Verfahren nach Anspruch 13, **dadurch gekennzeichnet, dass** das Verfahren von einer Rechenanlage (30) eines Fahrzeugsteuergeräts oder von einer Rechenanlage (30) einer eisenbahntechnischen Anlage ausgeführt wird.

15. Verfahren nach Anspruch 13 oder 14, **dadurch gekennzeichnet, dass**
- die Rechenanlage (30) als Sendeeinrichtung arbeitet und zu sendende Daten (D1) auf der Basis der errechneten Signatur (SIG) unter Bildung gesicherter Daten (D2) sichert und die gesicherten Daten (D2) zu einer Empfangseinrichtung (40) sendet, und
- die Empfangseinrichtung (40) die empfangenen Daten (D2) einer Signaturprüfung unterwirft und die Daten (D2) verwirft und/oder ein Warnsignal erzeugt, wenn die Signaturprüfung scheitert.
